**Europäisches Patentamt**

**European Patent Office**

**Office européen des brevets**

(19)

(11) Veröffentlichungsnummer: **0 202 262**
**B1**

(12) # EUROPÄISCHE PATENTSCHRIFT

(45) Veröffentlichungstag der Patentschrift:
**04.10.89**

(51) Int. Cl.⁴: **F 23 L 7/00**

(21) Anmeldenummer: **85905501.4**

(22) Anmeldetag: **15.11.85**

(86) Internationale Anmeldenummer:
**PCT/CH 85/00164**

(87) Internationale Veröffentlichungsnummer:
**WO 86/02987 (22.05.86 Gazette 86/11)**

(54) **VORRICHTUNG ZUR AKTIVIERUNG DES VERBRENNUNGSVORGANGES.**

(30) Priorität: **16.11.84  CH 5476/84**

(43) Veröffentlichungstag der Anmeldung:
**26.11.86 Patentblatt 86/48**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**EP-A-0 050 258**
**DE-A-2 359 414**
**DE-A-3 049 362**
**FR-A-520 440**
**US-A-3 865 907**
**US-A-4 030 456**
**US-A-4 144 015**
**US-A-4 173 450**
**US-A-4 376 739**
**US-A-19 977 63**

(73) Patentinhaber: **BALSIGER, Benno, via al mulino,
CH- 6814 Cadempino (CH)**

(72) Erfinder: **RICHINA, Primo, Diego, via al mulino,
CH- 6814 Cadempino (CH)**

(74) Vertreter: **Braun jr., André, c/o RITSCHER &
SEIFERT Patentanwälte VSP Kreuzstrasse 82, CH-
8032 Zürich (CH)**

EP 0 202 262 B1

# EP 0 202 262 B1

## Beschreibung

Die Erfindung betrifft eine Vorrichtung zur Aktivierung des Verbrennungsvorganges nach dem Oberbegriff des Patentanspruchs 1.

Wenn im Zusammenhang mit Verbrennungsanlagen davon die Rede ist, die Verbrennungsqualität zu verbessern, soll in erster Linie der Brennstoffverbrauch gesenkt und damit entsprechend Energie eingespart werden. Zusätzlich zu diesem Aspekt sollen jedoch bei modernen Anlagen auch technisch praktische Gesichtspunkte Berücksichtigung finden, wie eine leichtere und bessere Reinigung der eingesetzten Heizkessel und Brennkammern von Ruß und Ablagerungen, eine Optimierung des Energieaustauschs- und Leistungsvermögens, ein Erzielen eines günstigeren Wirkungsgrads der Verbrennungsanlage durch Änderungen der Flammgeometrie, eine Verringerung der Emission von Rauchgasen und festen Teilchen sowie eine Beseitigung möglicher Korrosionsursachen. Die bislang bekanntgewordenen Maßnahmen und Einrichtungen zur Verbesserung der vorgenannten Verfahrens- und Anlagenkomponenten sind im allgemeinen mit hohen Investitionen verbunden, was einer weit verbreiteten Anwendung im Wege steht.

Durch die EP-A-50 258 ist ein Verbrennungs-Katalysator bekannt, gemäß welchem zwischen einem Wasserbehälter und einer Brennzone eine Reguliervorrichtung angeordnet ist. Dabei ergibt sich im Betrieb der Nachteil, daß sich die beim Zünden des Brennstoffs und beim Umschalten von einer Stufe zur anderen auftretenden Druckschläge auf die Pufferfüllung der Reguliervorrichtung fortpflanzen, so daß Pufferflüssigkeit in den Wasserbehälter gelangt.

Aus der DE-A-2 359 414 ist eine Vorrichtung zum Einleiten von Dampf in das Kraftstoffzuleitungssystem einer Brennkraftmaschine bekannt, mit dem der Wirkungsgrad der Kraftstoffverbrennung verbessert und die Schadstoffemission gesenkt werden soll. Der in einem Behälter erzeugte Dampf wird bei dieser bekannten Vorrichtung durch eine hohl ausgeführte Leerlaufeinstellschraube des Vergasers der Brennkraftmaschine zugeführt. Zur Absicherung gegen einen unerwünschten Rückstrom oder gegen Fehlzündungsrückschläge vom Vergaser ist an einem Endabschnitt der Leerlaufeinstellschraube ein Kugelrückschlagventil vorgesehen, dessen Ventilkugel allein durch den Gasstrom steuerbar ist. Ein derartiges Rückschlagsystem besitzt nur einen geringen Sicherungswert und ist daher für den Einsatz in Feuerungsanlagen sichtlichungeeignet.

Die Aufgabe der Erfindung besteht insbesondere darin, unter Vermeidung der Nachteile des Bekannten bei der Vorrichtung der eingangs genannten Art Maßnahmen vorzusehen, die eine insgesamt verbesserte Aktivierung des Verbrennungsvorganges erzielen lassen und gleichzeitig die Betriebssicherheit entscheidend optimieren.

Die erfindungsgemäße Lösung dieser Aufgabe ist im Kennzeichen des Patentanspruchs 1 definiert. Weitere Merkmale und Ausführungsformen der Erfindung ergeben sich aus den weiteren Patentansprüchen.

Bei dieser erfindungsgemäßen Vorrichtung wird die für den Brenner der Verbrennungsanlage benötigte Verbrennungsluft durch ein Gemisch aus der üblicherweise verwendeten Umgebungsluft und aus durch die erfindungsgemäße Vorrichtung aktivierter Luft ersetzt. Durch Untersuchungen der Rauchgase am Ausgang eines Heizkessels wurde festgestellt, daß diese Aktivierung oder Anreicherung der insgesamt zugeführten Verbrennungsluft eine beachtliche Herabsetzung des Brennstoffverbrauchs bei vergleichbar hoher Ausgangsleistung bewirkt. Bezüglich des Verbrennungsvorgangs hat es sich gezeigt, daß der übliche Luftüberschuß vermindert und damit der feuerungstechnische Wirkungsgrad erhöht und stabilisiert werden konnte.

Unter Umweltgesichtspunkten ist die Senkung des Luftüberschusses von Bedeutung, da sie eine Verminderung der in die Atmosphäre abgegebenen Rauchgasmasse zur Folge hat und somit eine Reduktion der durch die Rauchgase bedingten Wärmeverluste. Die gesamte Verbrennung findet gleichsam mit annähernd stöchiometrischem Luftverhältnis statt.

Durch den mit der erfindungsgemäßen Vorrichtung erzielten Selbstreinigungseffekt der Brennkammer und der Rauchgasabzüge wird ferner der Zustand der Austauschoberfläche zwischen dem Energieträger und der Brennkammer verbessert, wodurch sich der Wirkungsgrad des Heizkessels als Energieumsetzer erhöht und gleichzeitig der Primärenergiebedarf gesenkt wird.

Eine bei jeder möglichen Betriebsstörung notwendigerweise erfolgende Niveauänderung der Pufferflüssigkeit führt zu einer sofortigen Stillsetzung des Brenners, so dass der Einsatz der erfindungsgemässen Vorrichtung praktisch als risikolos angesehen werden kann.

Nachstehend wird anhand der beiliegenden Zeichnung ein Ausführungsbeispiel der erfindungsgemässen Vorrichtung beschrieben.

Fig. 1   ist eine schematische Schnittdarstellung einer solchen Vorrichtung,

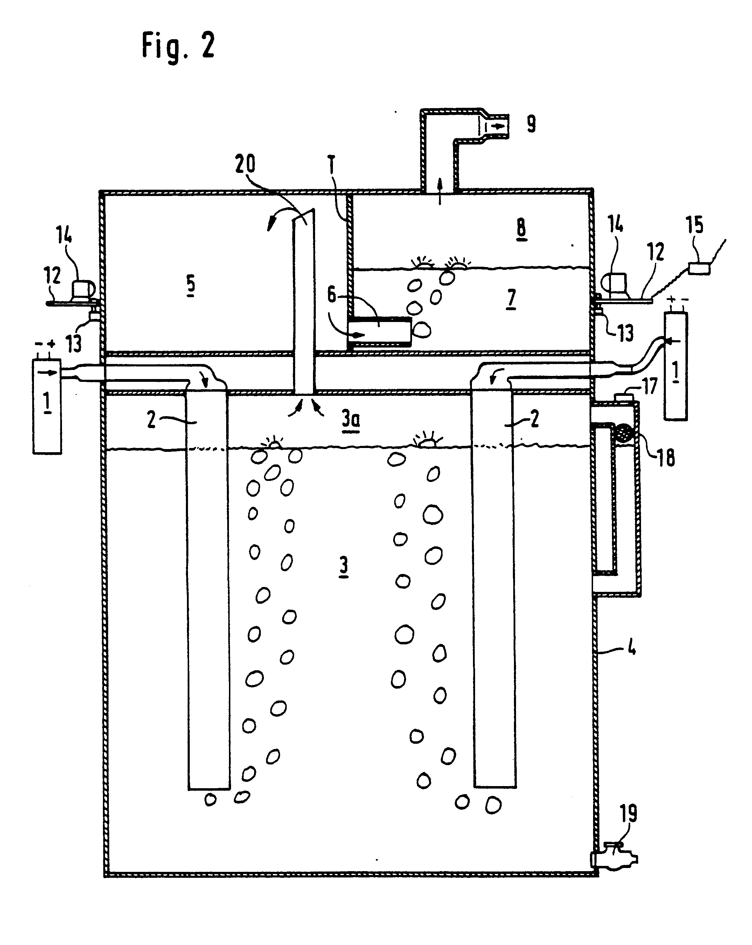

Fig. 2   zeigt, ebenfalls im Schnitt, einen vergrösserten Ausschnitt derselben mit zwei Blasrohren und
Fig. 3   veranschaulicht die Wirkung der Vorrichtung anhand eines Diagramms, das den $CO_2$-Gehalt der Rauchgase in Abhängigkeit von der Russzahl nach Bacharach zeigt.

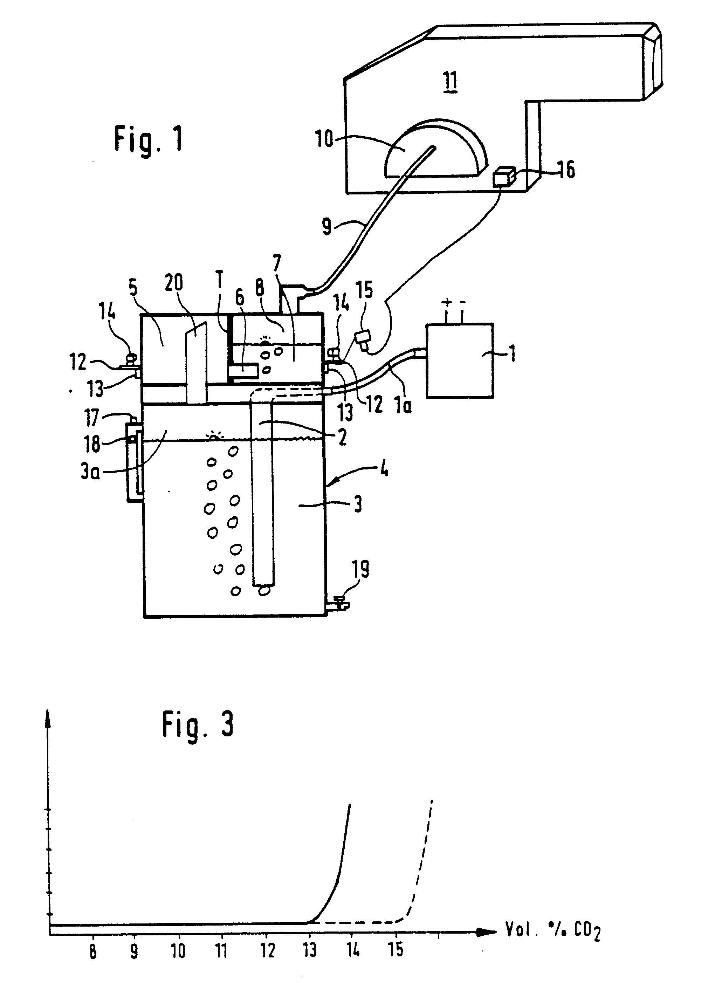

Gemäss Fig. 1 ist ein Behälter 4 über eine Leitung 1a mit einer Luftpumpe 1 verbunden, welche Druckluft durch ein oder mehrere Rohre 2 in eine im Behälter 4 enthaltene Flüssigkeit 3 pumpt. Die Flüssigkeit 3 füllt den Behälterraum nur teilweise aus, so dass oberhalb des Flüssigkeitsspiegels noch ein Luftraum 3a verbleibt.

Der obere Abschnitt des Behälters 4 beherbergt eine Druckausgleichskammer 5, die durch eine Trennwand T von einer weiteren, teilweise mit Öl 7 gefüllten Kammer 8 getrennt ist. Ein in der Trennwand T angeordnetes Rohr 6, das die beiden Kammern 5 und 8 verbindet, dient zum Luftdurchtritt und übt dabei eine Art

2

Stossdämpferfunktion aus.

Über eine Leitung 9 ist die Kammer 8 mit dem Brenner 11 verbunden, wo sie in den Luftansaugstutzen 10 mündet.

Durch die Luftpumpe 1 wird Luft durch ein oder mehrere Rohre 2 durch die aktive Flüssigkeit 3 in den Behälter 4 gepumpt.

Die beim Durchgang durch die Flüssigkeit aktivierte Luft wird anschliessend über ein Rohr 20 durch die Druckausgleichskammer 5 und die Röhre 6 mit kleinem Durchmesser und Stossdämpferfunktion 6 gepresst.

Nach dem Durchfliessen des Öls 7 und der zweiten Kammer 8 wird die aktivierte Luft mittels des Verbindungsschlauchs 9 der Ansaugluft 10 des Brenners 11 beigemischt.

Für die Funktionssicherung ist ein Elektronikschaltkreis auf einer Platte 12 mit Höhenverstellung 13 montiert.

Die Niveaukontrolle erfolgt durch Sensoren 14 mit Ultraschall, Licht, Infrarot usw.

Bei einem Leck oder Ausfall der Luftpumpe 1 gleicht sich der Ölstand in den Kammern 5 + 8 aus, da das Öl 7 durch die Röhre 6 in die Druckausgleichskammer 5 strömt. Die jetzt abgenommene Dichte registrieren die Sensoren 14; die damit verbundene Elektronik 12 schaltet über ein Relais 15 und die Brennersteuerung 16 den Brenner 11 ab.

Seitlich des Behälters 4 befindet sich ein Einfüllstutzen 17, welcher auf einer Niveaukontrolle 18 befestigt ist.

Ein Ablasshahn 19 ist unten am Tank vorgesehen.

Die Vorrichtung eignet sich zur Aktivierung des Verbrennungsvorganges in Feuerungsanlagen zur Verbrennung fossiler Brennstoffe wie Öl, Gas, Kohle sowie Holz etc., aber auch in Otto- und Dieselmotoren. Dabei ergibt sich ein praktisch kompletter Ausbrand der Kohlenwasserstoffe und eine stark reduzierte Russzahl.

Die Wasserfüllung des Behälters 4 enthält distilliertes Wasser mit 2 bis 12 Volumen %, vorzugsweise 5 %, Methylalkohol.

Versuche haben gezeigt, dass die Vorrichtung eine überraschende Zündbeschleunigung verbunden mit einem kompletten Ausbrand der Kohlenwasserstoffe ergibt.

Die Wirkung des Aktivators auf die Öl-, Gas- und Kohleverbrennung lässt sich folgendermassen zusammenfassen:

- Es ergibt sich die Möglichkeit,die Feuerungsanlage ohne Luftüberschuss zu betreiben.
- Selbstreinigung des Kessels.
- Steigerung des feuerungstechnischen Wirkungsgrades.
- Steigerung des Kesselwirkungsgrades.
- Die Möglichkeit, überdimensionierte Anlagen im Teillastbereich ohne Erhöhung der Rauchgasverluste zu betreiben was zu einer Steigerung des Jahreswirkungsgrades führt.
- Reduzierung der Rauchgasmasse.
- Reduzierung der Schwefelsäure ($H_2SO_4$) = Verlängerung der Lebensdauer des Kessels.
- Reduzierung der Stickoxyde.
- Reduzierung des Kohlenmonoxyds.

Fig. 3 zeigt den $CO_2$-Gehalt der Rauchgase in Abhängigkeit von der Russzahl nach Bacharach bei einer Ölfeuerung, welche mit einer Ausführungsform der erfindungsgemässen Vorrichtung ausgestattet war.

**Beispiel**

Ölfeuerung mit Heizöl EL
$CO_2$ maximum 15,3 Vol.-%
Mindestluftbedarf 14,5 kg/kg B
$\eta$ Feuerungstechnisch $100-(\frac{TA-TE}{CO_2}) \times 0.58$

Dabei ergaben sich die folgenden Werte:

|  | $\lambda$ 1,25 | $\lambda$ 1,0 |
|---|---|---|
| Rauchgasmasse | 19,18 kg/kg B | 15,5 kg/kg B |
| $CO_2$ | 12,2 Vol.-% | 15,3 Vol.-% |
| Temp. Rauchgas | 240 °C | 210°C |
| Raumtemperatur | 20°C | 20°C |
| $\eta$ feuerungstech. | 89,5 | 92,8 |

Hierbei bedeuten:

| EL | extra leicht |
|---|---|
| B | Brennstoff |
| $\eta$ | Wirkungsgrad |
| TA | abs. Abgastemperatur |

TE    abs. Eintrittstemperatur der Luft
$\lambda$    Luftverhältnis $\{\frac{CO_2\,max.}{CO_2\,gemessen}\}$

## Patentansprüche

1. Vorrichtung zur Aktivierung des Verbrennungsvorganges, insbesondere zwecks Erhöhung des prozentualen $CO_2$-Anteils und Reduzierung der Russzahl, in mit festem, flüssigem oder gasförmigem Brennstoff beschickten Verbrennungsanlagen, mit einem teilweise mit Wasser gefüllten Behälter (4), in dessen Füllung mindestens ein praktisch bis in dessen Bodennähe reichendes, an eine Druckluftquelle angeschlossenes Blasrohr (2) hineinragt, wobei zwischen dem Behälter (4) und einem Brennraum ein Steuergerät für die dem Brennraum aus dem Wasserbehälter zuströmende Feuchtluft eingeschaltet ist, welches teilweise mit einer von der Feuchtluft zu durchströmenden Pufferflüssigkeit gefüllt ist, dadurch gekennzeichnet,

dass das Steuergerät durch eine vertikale Trennwand in zwei Kammern unterteilt ist, deren eine (8), mit dem Brennraum verbundene, zum Teil mit Pufferflüssigkeit gefüllt ist, während in die andere Kammer (5) ein mit dem Luftraum des Wasserbehälters in Verbindung stehendes Rohr (20) hineinragt und beide Kammern nur durch eine in der Trennwand angebrachte Bohrung (6) mit einem solchen Durchgangsquerschnitt, verbunden sind, dass sich eine Stossdämpferfunktion ergibt.

2. Vorrichtung nach Anspruch 1 dadurch gekennzeichnet, daß die beiden Kammern (5, 8) des Steuergeräts einen im wesentlichen kastenförmigen Querschnitt besitzen und einen gemeinsamen Kammerboden sowie eine gemeinsame Kammerdecke aufweisen, daß der zum Brennraum führende Leitungsanschluß (9) der einen Kammer (8) an der Kammerdecke vorgesehen ist, daß das durch den Kammerboden der anderen Kammer (5) hindurchgehende Rohr (20) kurz vor dem Erreichen der Kammerdecke endet, daß die Bohrung (6) in der Nähe des Kammerbodens in der vertikalen Trennwand (T) ausgebildet ist und daß der Füllstand der Pufferflüssigkeit bei nicht betriebener, jedoch einsatzbereiter Vorrichtung in beiden Kammern ausgeglichen oberhalb des Öffnungsquerschnitts der Bohrung (6) liegt und während des Betriebs entsprechend der sich ändernden Druckverhältnisse in den beiden Kammern (5, 8) auf ein vorgegebenes Niveau in der Kammer (8) ansteigt.

3. Vorrichtung nach Anspruch 1, dadurch gekennzeichnet, daß das Steuergerät mit einer den Füllstand der einen Kammer (8) überwachenden Niveaukontrolle (14) versehen ist.

4. Vorrichtung nach Anspruch 3, dadurch gekennzeichnet, daß als Pufferflüssigkeit Öl verwendet wird und daß die Niveaukontrolle auf der Basis von Ultraschall, Infrarot- oder Lichtstrahlen arbeitet und eine mit einer Brennersteuerung (16) für den Brennraum verbundene Sicherheitsabschalteinrichtung (14, 15) aufweist.

5. Vorrichtung nach einem der Ansprüche 1 bis 4, dadurch gekennzeichnet, daß die Wasserfüllung des Behälters destilliertes Wasser mit 2 bis 12 %, vorzugsweise etwa 5 % Methylalkohol enthält.

## Revendications

1. Dispositif destiné à l'activation du processus de combustion, ayant notamment pour objectif d'accroître le pourcentage de $CO_2$ et de réduire l'indice de noircissement, dans des installations de combustion alimentées en combustibles solide, liquide ou gazeux, comportant un réservoir (4) rempli partiellement d'eau, dans le remplissage duquel au moins un tuyau de soufflage (2) raccordé à une source d'air comprimé pénètre pratiquement jusqu'à proximité de son fond, un dispositif de commande étant intercalé entre le réservoir (4) et une zone de combustion pour l'air humide affluant dans la zone de combustion en provenance du réservoir à eau, lequel est partiellement rempli d'un liquide tampon à faire traverser par l'air humide, caractérisé en ce que:

le dispositif de commande est divisé en deux chambres par une paroi verticale dont une chambre (8) reliée à la zone de combustion est en partie remplie du liquide tampon, tandis que dans l'autre chambre (5) pénètre un tuyau (20) qui est en liaison avec la zone d'air du réservoir à eau et les deux chambres ne sont reliées que par un alésage (6) pratiqué dans la paroi de séparation d'une section de passage telle que l'on obtient une fonction d'amortisseur.

2. Dispositif selon la revendication 1, caractérisé en ce que les deux chambres (5, 8) du dispositif de commande ont une section transversale essentiellement en forme de caisson et présentent un fond de chambre commun ainsi qu'un toit de chambre commun, en ce que le raccordement par tuyauterie (9) menant à la zone de combustion de l'une des chambres (8) est prévu sur le plafond de la chambre, en ce que le tuyau (20) traversant le fond de l'autre chambre (5) se termine peu avant de parvenir au plafond de la chambre, en ce que l'alésage (6) à proximité du fond de la chambre est formé dans la paroi de séparation verticale (T) et en ce que le niveau de remplissage du liquide tampon pour le dispositif à l'arrêt mais prêt à fonctionner est équilibré dans les deux chambres au-dessus de la section d'ouverture de l'alésage (6) et pendant le fonctionnement croît jusqu'à un niveau prédéterminé dans la chambre (8) en fonction des conditions de pression qui varient dans les deux chambres (5, 8).

3. Dispositif selon la revendication 1, caractérisé en ce que le dispositif de commande est muni d'un contrôle de niveau (14) surveillant le niveau de remplissage d'une chambre (8).

4. Dispositif selon la revendication 3, caractérisé en ce qu'en tant que liquide tampon on utilise de l'huile et en ce que le contrôle de niveau fonctionne sur la base des ultrasons, rayons infrarouges ou lumineux et comporte un système d'interruption de sécurité (14, 15) relié à une commande de brûleur (16) pour la zone de combustion.

5. Dispositif selon l'une quelconque des revendications 1 à 4, caractérisé en ce que le remplissage d'eau du réservoir contient de l'eau distillée avec 2 jusqu'à 12 %, de préférence environ 5 % d'alcool méthylique.

## Claims

1. Device for activating the combustion process, in particular for the purpose of increasing the $CO_2$ content in percent and reducing the soot index, in combustion installations fed with solid, liquid or gaseous fuel, having a tank (4) which is partially filled with water and into the filling of which there projects at least one blow pipe (2) which reaches virtually into the vicinity of the base of said tank and is connected to a compressed-air source, a control device for the moisture-laden air flowing to the combustion space from the water tank being connected between the tank (4) and a combustion space, said control device being partially filled with a buffer liquid to be flowed through by the moisture-laden air, characterized in that the control device is divided by a vertical partition wall into two chambers, one of which (8), which is connected to the combustion space, being partially filled with buffer liquid while a tube (20) communicating with the air space of the water tank projects into the other chamber (5), and both chambers are connected only by a bore (6) made in the partition wall and having a cross-section such that a shock-absorber function results.

2. A device according to Claim 1, characterized in that the two chambers (5, 8) of the control device have an essentially box-shaped cross-section and a common chamber base as well as a common chamber ceiling, that the connecting line (9), leading to the combustion space, of the one chamber (8) is provided at the chamber ceiling, that the tube (20) passing through the chamber base of the other chamber (5) ends shortly before reaching the chamber ceiling, that the bore (6) is formed in the vicinity of the chamber base in the vertical partition wall (T) and that, while the device is not being operated but is ready for operation, the filling level of the buffer liquid is balanced above the opening cross-section of the bore (6) in both chambers and rises to a predetermined level in the chamber (8) during operation in accordance with the changing pressure conditions in the two chambers (5, 8).

3. A device according to Claim 1, characterized in that the control device is provided with a level monitor (14) which monitors the filling level of the one chamber (8).

4. Device according to Claim 3, characterized in that oil is used as buffer liquid and that the level monitor operates on the basis of ultrasound, infrared beams or light beams and has a safety switch-off device (14, 15) connected to a burner control (16) for the combustion space.

5. Device according to any of Claims 1 to 4, characterized in that the water filling of the tank contains distilled water with 2 to 12 %, preferably about 5 %, of methyl alcohol.

Fig. 1

11

10

16

9

7

5   20   T   6   8   14   15   1

14

12

13

13   12   1a

17

18   2

3a

4

3

19

Fig. 3

Vol. % CO₂

8   9   10   11   12   13   14   15

# Fig. 2